Europäisches Patentamt

European Patent Office

Office européen des brevets

(11) Veröffentlichungsnummer: **0 141 385**
**A2**

(12) # EUROPÄISCHE PATENTANMELDUNG

(21) Anmeldenummer: **84112897.8**

(22) Anmeldetag: **25.10.84**

(51) Int. Cl.⁴: **G 03 B 17/56**

(30) Priorität: **26.10.83 IT 4573083**

(43) Veröffentlichungstag der Anmeldung:
**15.05.85 Patentblatt 85/20**

(84) Benannte Vertragsstaaten:
**AT BE CH DE FR GB LI LU NL SE**

(71) Anmelder: **I.C.C. INTERGRATED CAMERA COMPLEMENTS**
**Via Monte Rest 12**
**I-33170 Pordenone(IT)**

(72) Erfinder: **Rosset, Ivo**
**Via Monte Rest, 12**
**I-33170 Pordenone(IT)**

(74) Vertreter: **von der Bey, Gerhard**
**Auenstrasse 31a**
**D-8012 Ottobrunn(DE)**

(54) Vorrichtung zur Herstellung von Panoramephotographien mit einem üblichen Photoapparat.

(57) Auf einem festen Ständer (6), wie etwa einem herkömmlichen Stativ, wird eine drehbare Halterung (1) angebracht, auf der ein normaler Photoapparat befestigt werden kann. Die drehbare Halterung (1) wird gegenüber dem festen Ständer (6) von einem untersetzten Getriebemotor (7) über einen Riementrieb (72, 52-71) in Umdrehung versetzt. Ein zweiter untersetzter Getriebemotor (8) treibt ebenfalls über einen Riementrieb (82, 41-81) ein drehbares Verbindungselement (44) an, das mit dem Aufspulknopf (45) des Films in Eingriff steht. An dem Objektiv des Photoapparats wird wie eine normale Sonnenblende ein Fensterelement (9) angebracht, das aus wenigstens einem opaken, mit einem senkrechten Spalt (98) versehenen Schirm besteht, der die gleiche Aufgabe der Verringerung der Bildweite in Querrichtung hat wie das mit einem Spalt versehene Plättchen, das in den Apparaten für Panoramaaufnahmen vor dem lichtempfindlichen Teil des Films angeordnet ist. Beide Getriebemotoren (7 und 8) sind mit Detektoren (73-83) für die entsprechenden Drehgeschwindigkeiten versehen. Eine elektronische Einrichtung (90) steuert und regelt diese Geschwindigkeiten und bewirkt insbesondere ein kontrollierte Änderung der Drehgeschwindigkeit des Getriebemotors (8) in der Weise, daß die Translationsgeschwindigkeit des Films konstant bleibt.

Fig. 2

EP 0 141 385 A2

DIPL.-CHEM., DR. RER. NAT.
**GERHARD VON DER BEY**
PATENTANWALT
EUROPEAN PATENT ATTORNEY

D-8012 OTTOBRUNN, den 4. Nov. 1984
AUENSTRASSE 31a
FERNRUF (089) 60 13 189

Mein Zeichen: E 004.

*1*

Europäische Patentanmeldung Nr. 84112897.8.

I.C.C. INTEGRATED CAMERA COMPLEMENTS, I-33170 Pordenone.

"Vorrichtung zur Herstellung von Panoramaphotographien mit einem üblichen Photoapparat"

Die Erfindung hat eine Vorrichtung zum Gegenstand, die es ermöglicht, mit normalen an dieser Vorrichtung anbringbaren Photoapparaten Panoramaphotographien anzufertigen.

Es ist bekannt, daß zur Anfertigung von Photographien, die ein nur etwas größeres Bildfeld erfassen als die üblichen, normalerweise Spezialobjektive, sogenannte "Weitwinkel" verwendet werden, und zur Erfassung von noch größeren Feldern in einigen Fällen die sogenannten "Fischaugen" eingesetzt werden, die jedoch erhebliche Bildverzerrungen verursachen. Um jedoch Photographien zu erhalten, die sehr ausgedehnte Felder bis zu 180° und mehr abdecken, werden schließlich besondere Apparate eingesetzt, die im allgemeinen sehr kompliziert und kostspielig sind. Diese Apparate sind überdies nur für den Zweck verwendbar, für den sie hergestellt worden sind, und beruhen zumeist auf

0141385

dem in dem kanadischen Patent Nr. 30143 beschriebenen Typ,
der noch auf das Jahr 1888 zurückgeht. Andere Arten von
Apparaten sehen verschiedene Systeme vor, die sämtlich
sehr komplex sind.

Eine bequemere und besonders interessante Lösung ist schließlich die in dem am 29. August 1972 in Monaco angemeldeten
Patent Nr. 1008 beschriebene, die praktisch das gleiche
Prinzip wie das des oben erwähnten kanadischen Patents verwertet, jedoch den Einsatz eines normalen Photoapparats
vorsieht, der auf einer drehbaren Halterung angebracht ist,
bei der ein Motor diese Halterung selbst und gleichzeitig
über ein geeignetes Getriebe auch die Aufwickelrolle des
Films in Umdrehung versetzt. Wie in dem kanadischen Patent
ist die belichtete Oberfläche des Films durch einen kleinen
senkrechten Spalt begrenzt, der sich in einem hierfür vorgesehenen Plättchen befindet, das unmittelbar vor der
lichtempfindlichen Oberfläche des Films in den Photoapparat
eingebaut wird. Diese Lösung weist jedoch verschiedene
Nachteile auf. Erstens muß in dem Photoapparat das mit
einem Spalt versehene Plättchen angebracht werden, was
wenig zweckmäßig und unbequem ist, weil jeder Apparat im
Inneren anders ausgebildet ist, was den Einsatz eines jeweils passenden Plättchens für jede Art von Apparat zur
Folge hat. Außerdem beschränkt diese Anbringung des mit
einem Spalt versehenen Plättchens die Einsatzmöglichkeit
des Photoapparats auf die ausschließliche Anfertigung von
Panoramaaufnahmen. Ein weiterer Nachteil dieser Lösung
liegt darin, daß während des Aufnahmevorgangs die Translationsgeschwindigkeit des Films allmählich ansteigt, weil
bei konstanter Drehgeschwindigkeit der Aufwickelspule der
Aufspuldurchmesser allmählich in dem Maße anwächst, wie
sich das Filmmaterial auf dieser Spule ansammelt, was
offensichtlich fühlbare Maßveränderungen in dem erhaltenen
Bild zu Folge hat, die insbesondere bei Aufnahmen, die sehr
breite Felder abdecken, besonders augenfällig sind.

Ziel der Erfindung ist die Beseitigung der oben erwähnten Beschränkungen und Nachteile, was mit der erfindungsgemäßen Vorrichtung erreicht wird, die im wesentlichen in an sich bekannter Weise aus einer drehbaren Halterung (im folgenden auch als Gehäuse bezeichnet) besteht, auf der ein gewöhnlicher Photoapparat befestigt werden kann, wobei diese drehbare Halterung auf einem festen Ständer anbringbar ist, wie etwa einem Stativ für Photoapparate oder dergleichen, und die Vorrichtung dadurch gekennzeichnet ist, daß auf dem Objektiv des Photoapparats wie eine gewöhnliche Sonnenblende ein Fensterelement angebracht wird, das das Bild in Querrichtung zu begrenzen vermag und enthält: erste Antriebseinrichtungen, die die genannte drehbare Halterung gegenüber dem festen Ständer zu drehen vermögen, zweite Antriebseinrichtungen, durch die die Aufwickelspule für den in diesem Photoapparat enthaltenen Film in Umdrehung versetzt wird, wobei die beiden Antriebseinrichtungen aus zwei getrennten untersetzten Getriebemotoren bestehen, ferner einen elektronischen Schaltkreis, der im wesentlichen die Geschwindigkeiten der erstgenannten und der zweitgenannten Antriebseinrichtungen so zu steuern und zu regeln vermag, daß die Geschwindigkeit der erstgenannten Antriebseinrichtungen unbedingt konstant gehalten wird, während die der zweitgenannten Antriebseinrichtungen so verändert wird, daß die Gleitgeschwindigkeit des Films den richtigen Wert hat und gleichförmig ist.

Ein Ausführungsbeispiel der Erfindung wird an Hand der Zeichnung erläutert. Es zeigen:

Figur 1 eine perspektivische Ansicht der erfindungsgemäßen Vorrichtung;

Figur 2 im einzelnen einen Schnitt durch die genannte Vorrichtung;

Figur 3 schematisch einen gewöhnlichen Photoapparat mit
        den entsprechenden Wickelspulen für den Film sowie
        im Schnitt das Fensterelement, das erfindungsgemäß
        an dem Objektiv des Photoapparats angebracht ist;

Figur 4 in einer perspektivischen Darstellung das erwähnte
        Fensterelement in einer einer normalen Sonnenblende
        ähnlichen Ausführung;

Figur 5 gleichfalls in einer perspektivischen Darstellung
        eine weitere mögliche Ausbildung des Teils von Figur 4
        und

Figur 6 ein Blockschema des auf der erfindungsgemäßen Vorrichtung angebrachten elektronischen Schaltkreises.

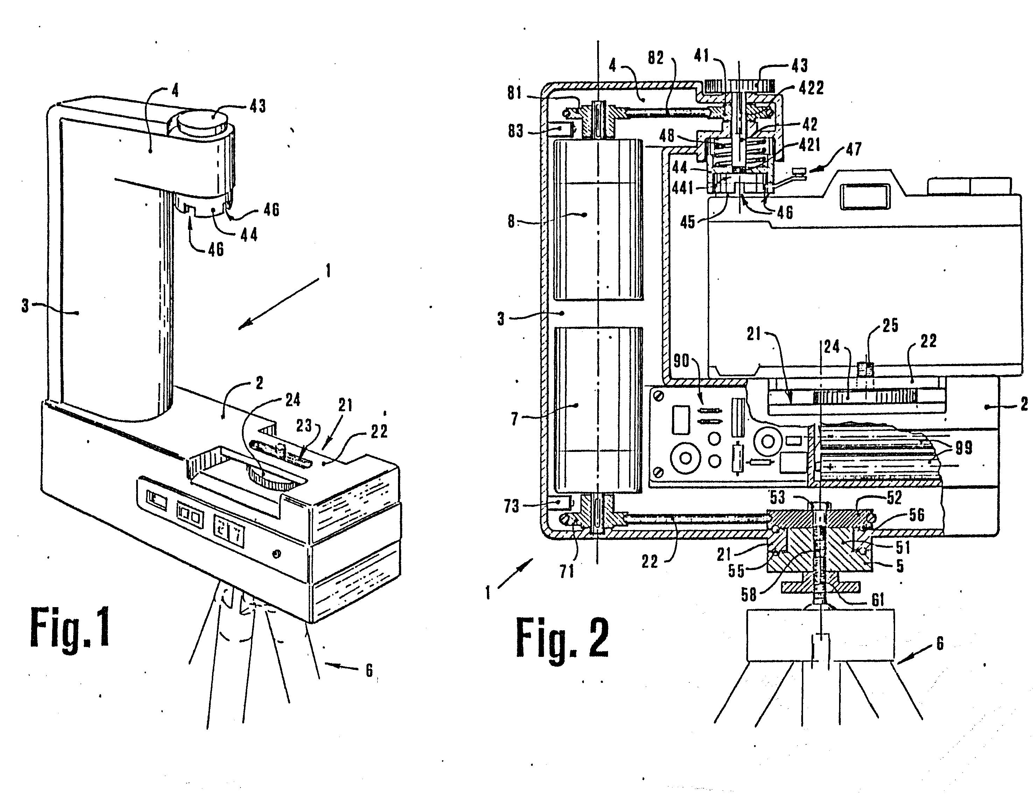

In den Figuren 1 bis 6 werden gemeinsame Teile mit den
gleichen Bezugsziffern bezeichnet, in Figur 2 ist außerdem schematisch mit einer dünnen Linie allgemein ein an
der Vorrichtung angebrachter Photoapparat bezeichnet.

Insbesondere in den Figuren 1 und 2 ist zu erkennen, daß
die Vorrichtung aus einem Gehäuse 1 besteht, das so ausgebildet ist, daß es einen im wesentlichen quaderförmigen
Hauptteil 2 bildet, von dem rechtwinklig ein senkrechter
Teil 3 ausgeht, der oben in einen nachfolgend als "Oberteil" 4 bezeichneten Teil endet, der über dem Hauptteil 2
vorragt.  Aus der Unterseits des Hauptteils 2 steht ein
Flansch 5 vor, der die untere Wand mit einem zylindrischen
Teil 51 durchsetzt, auf dem mit einer Bolzenschraube 53
eine Riemenscheibe 52 befestigt ist. Ein erster Kugelkranz 55 ist zwischen diesem Flansch 5 und dem entsprechenden vorspringenden Teil 21 auf der Unterseite des Hauptteils 2 und ein zweiter Kugelkranz 56 zwischen der Riemenscheibe 52 und der entsprechenden unteren Wand des Hauptteils 2 angeordnet, so daß auf diese Weise ein regelrechtes Kugellager entsteht, das eine freie, aber genaue Drehbewegung der Halterung 1 gegenüber dem Flansch 5 ermöglicht.
Der Flansch 5 enthält außerdem eine mittig verlaufende
Gewindebohrung 58, in die eine Schraube 61 eines festen
Ständers, wie etwa eines gewöhnlichen Stativs 6, für die
Befestigung auf diesem Ständer paßt. Die Riemenscheibe 52
ist außerdem über den Riemen 72 mit der Riemenscheibe 71
verbunden, die auf die Welle eines ersten untersetzten
Getriebemotors 7 aufgebracht ist. Daraus ergibt sich, daß,
wenn der Getriebemotor 7 in Umdrehung versetzt wird, sich
das gesamte Gehäuse 1 und somit die erfindungsgemäße Vorrichtung gegenüber dem festen Ständer 6 dreht. Gleichfalls
an dem Hauptteil 2 ist auf der Oberseite eine Ausnehmung 21
vorgesehen und in ihrem oberen Bereich eine Platte 22 mit
einem Langloch 23. Zwischen dem Boden der Ausnehmung 21
und der Platte 22 befindet sich ein Befestigungselement
bestehend aus einem Scheibenelement 24, von dessen Oberseite eine Schraube 25 ausgeht, die in das Langloch 23 eingreift und mit einem Teil über die Platte 22 vorsteht.
Die Schraube 25 kann in die Gewindebohrung eingreifen,
mit der normalerweise alle Photoapparate ausgestattet sind,
um ihre Befestigung auf dem Stativ zu ermöglichen. Die
Schraube 25 und das gesamte Befestigungselement sind in
dem Langloch 23 in Längsrichtung gleitend gelagert, so daß
es möglich ist, die Schraube 25 in eine Stellung zu bringen,
die der Befestigungsbohrung des auf der Vorrichtung zu befestigenden Photoapparats entspricht, wobei diese Bohrung
wie bekannt von Apparat zu Apparat verschieden ist. Am
Ende des Oberteils 4 befindet sich eine Riemenscheibe 41,
die auf eine Welle 42 aufgebolzt ist, an deren oberem Ende
ein Antriebselement 43 befestigt ist, das im wesentlichen
aus einem Scheibenkörper besteht und an dessen Unterseite
ein abnehmbares Verbindungselement 44 befestigt ist, das
im wesentlichen aus einem Zylinderkörper besteht, der unten
in einen Hohlteil 441 endet, in den der Aufspulknopf 45

0141385

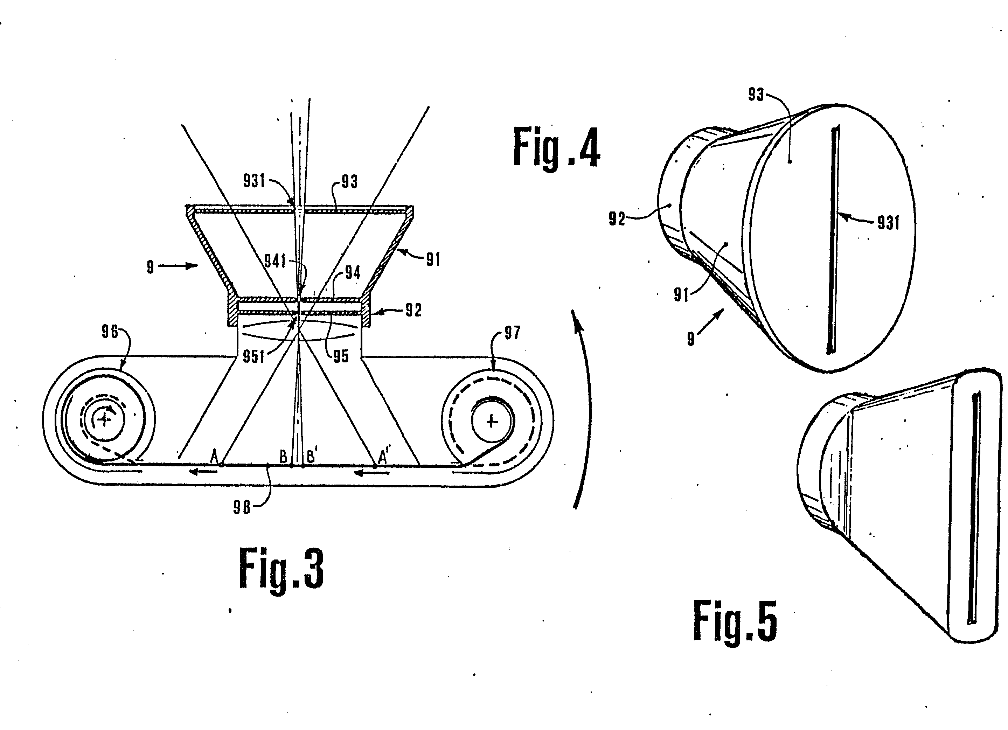

für den Film eindringen kann, mit dem die normalen Photoapparate ausgestattet sind. An der Kreisscheibe, die sich
auf dem Unterteil des Verbindungselements 44 ergibt, befinden sich Vertiefungen 46, in die der Aufspulhebel 47
eingreifen kann, der wie bekannt aus dem Aufspulknopf 45
ausziehbar ist. Um die Vorrichtung an die unterschiedlichen Arten von Aufspulknöpfen anpassen zu können, mit
denen die verschiedenen im Handel befindlichen Photoapparate ausgestattet sind, wird das Verbindungselement 44
unterschiedliche Gestalt und Größe annehmen können und
außerdem leicht austauschbar sein, weil es in abnehmbarer
Weise durch Aufschrauben auf das mit einem Gewinde versehenen Ende 421 der Welle 42 befestigt werden kann. Zwischen dem Oberteil 4 und dem Verbindungselement 44 ist
eine Feder 48 angeordnet, die bestrebt ist, dieses gegen
den auf der Vorrichtung befestigten Photoapparat zu drücken.
Die Riemenscheibe 41 trägt außerdem ein quadratisches Mittelloch, wodurch sie mit einem Teilstück 422, das ebenfalls
einen entsprechenden quadratischen Querschnitt aufweist
und auf der Welle 42 vorgesehen ist, in Eingriff zu stehen
vermag, so daß sie ihre Drehbewegung auf die Welle 42 übertragen kann, wobei jedoch die Welle 42 in dieser Öffnung
eine Translationsbewegung in Längsrichtung ausführen kann.
Es liegt auf der Hand, daß die Bedienungsperson, die den
Photoapparat an der erfindungsgemäßen Vorrichtung anzubringen wünscht, das Antriebselement 43 nach oben schieben
muß, so daß das Verbindungselement 44 angehoben und das
Einsetzen des Photoapparats ermöglicht wird. Sobald daher
der Photoapparat in der vorbeschriebenen Weise mittels des
Befestigungselements 24-25 an dem Hauptteil 2 befestigt ist,
gibt die Bedienungsperson das Antriebselement 43 frei, und
das Verbindungselement 44 erfaßt den Aufspulknopf 45, der
in das Verbindungselement mit dem entsprechenden Hebel 47
eindringt, der in eine der Vertiefungen 46 einrastet. Die
Riemenscheibe 41 ist schließlich über den Riemen 82 mit der Riemenscheibe 81 verbunden, die auf der Welle eines
zweiten untersetzten Getriebemotors 8 sitzt. Daraus ergibt
sich, daß, wenn der Getriebemotor 8 in Umdrehung versetzt
wird, die Filmaufwickelspule 96 sich zu drehen beginnt.
Die beiden Getriebemotoren 7 und 8 sind außerdem jeweils
mit Sensoren 73 bzw. 83 an sich bekannter Art ausgestattet,
die die Drehbewegung feststellen können, um auf diese Weise
eine Steuerung der jeweiligen Drehgeschwindigkeiten durch
einen geeigneten elektronischen Schaltkreis 90 zu ermöglichen. Außerdem kann eine unabhängige Speisung vorgesehen
sein, die z.B. aus vorzugsweise wiederaufladbaren Batterien
99 besteht. Schließlich wird nach Figur 3 auf das Objektiv
des Photoapparats ein Fensterelement 9 aufgesetzt, dem die
gleiche Funktion zukommt wie dem mit einem Spalt versehenen
Plättchen, das nach den anderen bekannten Lösungen in den
Photoapparat eingesetzt werden müßte. Dieses Fensterelement 9 könnte ganz einfach aus einem opaken, mit einem
Spalt versehenen Schirm bestehen; wie jedoch die Praxis
gezeigt hat, bewirkt diese Lösung ein Diffuswerden des in
den Photoapparat eindringenden Lichtbündels und folglich
eine deutliche Trübung des erzielten Bildes. Um diesen Nachteil zu beseitigen, wurde das Fensterelement 9 geschaffen,
das nach Figur 4 äußerlich einer normalen Sonnenblende ähnelt.
Es besteht nämlich nach Figur 3 aus einem konischen Gehäuse 91, das einen Gewindering 92 trägt, der dazu dient,
das Gehäuse 91 in bekannter Weise an dem Objektiv des Photoapparats zu befestigen, ganz ebenso wie dies bei einer normalen Sonnenblende der Fall ist; in dem konischen Gehäuse 91
sind jedoch drei Trennwände angeordnet, eine erste Trennwand 93 befindet sich am größeren Ende und zwei Trennwände
94 und 95 befinden sich in geringem Abstand voneinander am
kleineren Ende. Die Trennwände 93, 94 und 95 sind mit
Spalten 931 bzw. 941 bzw. 951 versehen, die sich längs
eines Durchmessers der Trennwände erstrecken und der selben
Ebene angehören. Dieses Fensterelement 9 wird daher so an
dem Objektiv des Photoapparats angebracht, der wie oben beschrieben an der erfindungsgemäßen Vorrichtung befestigt ist, daß die durch die Spalte 931, 942 und 951 verlaufende Ebene quer zum Film und in Richtung seiner Breite verläuft. Nach Figur 3 verringert sich die Weite des auf dem Film 98 entstehenden Bildes durch diese Anbringung von der Länge A-A' auf die Länge B-B'. Man erhält auf diese Weise die gleiche Wirkung, die bei anderen Lösungen durch das mit einem Spalt versehene, im Inneren des Photoapparats vor dem Film angeordnete Plättchen, wobei jedoch die Schwierigkeit der Anbringung, die Einschränkungen für den Gebrauch und alle weiteren Nachteile, die wie bekannt und schon dargelegt sich daraus ergeben, vermieden werden. Es wird darauf hingewiesen, daß das Fensterelement 9 vorteilhafterweise auch die in Figur 5 dargestellte Form annehmen kann, die bei den durchgeführten Versuchen praktisch die gleichen Ergebnisse erbracht hat. Stets nach Figur 3 ergibt sich, daß der anfänglich auf der Spule 97 aufgewickelte Film 98 während der Panoramaaufnahme allmählich auf die Aufwickelspule 96 umgespult wird, die wie vorbeschrieben vom Getriebemotor 8 über das Verbindungselement 44 in Umdrehung versetzt wird. Die anfängliche Anordnung des Films 98 vor seinem Aufspulen auf die Aufwickelspule 96 ist durch die dick gestrichelte Linie bezeichnet, der am Ende nach dem Aufwickeln auf die Spule 96 durch die durchgehende dicke Linie gezeigt ist. Es ist klar, daß auf der Aufwickelspule 96 die allmähliche Ansammlung von Filmmaterial eine Zunahme des Aufspuldurchmessers verursacht, so daß, wenn die Drehgeschwindigkeit der Spule 96 konstant gehalten wird, wie dies beispielsweise bei der in dem erwähnten monegassischen Patent Nr. 1008 beschriebenen Vorrichtung der Fall ist, die Gleitgeschwindigkeit des Films allmählich ansteigt, was eine merkliche Maßverschiebung in dem erhaltenen Bild verursacht. Um auch diesen Nachteil auszuschalten, sieht die erfindungsgemäße Vorrichtung eine geeignete Veränderung der Drehgeschwindigkeit der Spule 96 in der Weise vor, daß die Gleitgeschwindigkeit des Films konstant gehalten wird, was durch einen geeigneten elektronischen Schaltkreis 90
erzielt wird, der eine vorbestimmte und gesteuerte Verringerung der Drehgeschwindigkeit des Getriebemotors 8 und
somit der Spule 96 bewirkt. Am Rande sei vermerkt, daß der
größeren Klarheit halber in Figur 3 der Drehsinn des Photoapparats und der Aufwickelspule 96 sowie die Gleitrichtung
des Films 98 durch entsprechende Pfeile angezeigt sind.

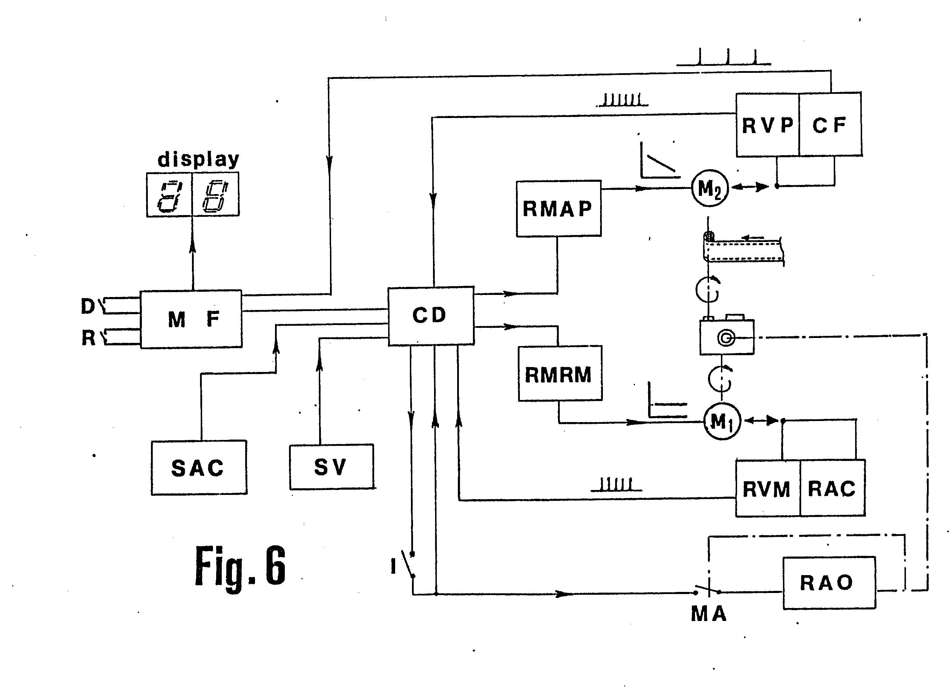

Die Funktionsweise der erfindungsgemäßen Vorrichtung wird
schließlich nachfolgend auch unter Bezugnahme auf das
Blockschema von Figur 6 beschrieben, das den an der Vorrichtung selbst angebrachten elektronischen Schaltkreis
zeigt, der selbstverständlich auch zu der Erfindung als
ganzem gehört. Dieser elektronische Schaltkreis 90 ermöglicht
es, eine völlige Konstanz nicht nur der Translationsgeschwindigkeit des Films, sondern auch der Drehgeschwindigkeit des Apparats sowie ihre genaue gegenseitige Abstimmung
und darüber hinaus weitere vorteilhafte Funktionen zu erzielen.

Die Funktionsweise der gesamten Vorrichtung ist die folgende:

Die Bedienungsperson bringt an dem Objektiv des Photoapparats das Fensterelement 9 an und befestigt den Apparat
wie beschrieben an der erfindungsgemäßen Vorrichtung, die
ihrerseits zuvor auf einem geeigneten festen Ständer (Stativ 6)
angebracht worden ist. Selbstverständlich hat er, wie bereits
erwähnt und wie bekannt, zuvor den in der Aufwickelspule 96 enthaltenen Film auf die Spule 97 übertragen, und bringt den
Zeitwähler des Photoapparats in die Stellung "BELICHTUNG",
die normalerweise mit "B" bezeichnet ist. Er stellt dann
das Aufnahmefeld fest und bestimmt dessen Anfang und Ende.
Zur Festlegung des Beginns der Aufnahme bringt er die Vorrichtung in eine Stellung, in der der Photoapparat sich
kurz vor dem Beginn des aufzunehmenden Feldes befindet, und
legt die Weite dieses Feldes durch den Feldweitenwähler SAC
fest, der wie nachfolgend beschrieben die Aufnahme selbsttätig unterbrechen wird. Je nach der Brennweite des verwendeten Objektivs wählt er dann die entsprechende Drehgeschwindigkeit des Apparats und die entsprechende Translationsgeschwindigkeit des Films durch den Geschwindigkeitswähler SV, der die Datenvergleichsschaltung CD anweist, die jeweilige Speisung der Getriebemotoren $M_1$ und $M_2$, die den Getriebemotoren 7 bzw. 8 von Figur 2 entsprechen, und somit die jeweiligen Grund-Rotationsgeschwindigkeiten festzulegen. Die so festgelegten Speisungen gehen dann durch die Regler RMRM (Regler des Motors für die Drehbewegung des Photoapparats) und RMAP (Regler des Motors für die Filmaufspulung) hindurch. Der Regler RMRM wirkt auf die Speisung des Getriebemotors $M_1$ (7) in der Weise, daß seine Drehgeschwindigkeit und somit die des Photoapparats absolut konstant gehalten werden, während der Regler RMAP auf die Speisung des Getriebemotors $M_2$ (8) in der Weise wirkt, daß seine Drehgeschwindigkeit in direktem Verhältnis zur Zunahme des Aufspuldurchmessers des Films allmählich verringert wird, so daß, wie bereits erwähnt, eine absolut konstante Gleitgeschwindigkeit des Films erzielt wird. Die von dem Sensor 73 des Getriebemotors 7 kommenden Impulse werden in den Detektor RVM, der die Drehgeschwindigkeit des Photoapparats feststellt, und in den Detektor für die Feldöffnungsweite RAC eingespeist, der die Aufgabe hat, in jedem Augenblick den von dem Photoapparat beschriebenen Drehwinkel vom Anfang seiner Bewegung an zu melden. Das von den Detektoren RVM und RAC kommende Ausgangssignal wird in die Datenvergleichsschaltung CD gegeben, wo es mit dem auf dem Wähler SV zuvor festgelegten Wert verglichen wird, um die gewünschte Drehgeschwindigkeit des Getriebemotors $M_1$ (7) und somit des Photoapparats zu erzielen, aber auch mit dem auf dem Feldweitenwähler SAC eingestellten Wert, um den selbsttätigen Stillstand dieses Getriebemotors $M_1$ (7) zu erhalten. Die von dem Sensor 83 des Getriebemotors 8 kommenden Impulse werden stattdessen in den Detektor RVP eingespeist, der die Drehgeschwindigkeit der Aufwickelspule 96 des Films 98 feststellt, und in den Bildzähler CF. Das Ausgangssignal aus dem Detektor RVP wird der Datenvergleichsschaltung CD zugeleitet, wo es mit dem auf dem Wähler SV eingestellten Wert verglichen wird, um die gewünschte Grund-Drehgeschwindigkeit des Getriebemotors $M_2$ (8) zu erhalten, die dann, wie beschrieben, von dem Regler RMAP entsprechend verändert wird, aber auch mit dem auf dem Wähler SAC eingestellten Wert, um den automatischen Stillstand dieses Getriebemotors $M_2$ (8) zu erhalten, der gleichzeitig mit dem Stillstand des Getriebemotors $M_1$ (7) erfolgt. Das Ausgangssignal vom Bildzähler CF wird stattdessen in den Bildspeicher MF geleitet, und der gespeicherte Wert wird dann der Datenvergleichsschaltung CD zugeführt, die daraufhin den Regler RMAP anweist, den Getriebemotor $M_2$ (8) so zu speisen, daß seine Drehgeschwindigkeit stets auf den erreichten Aufspuldurchmesser bezogen ist, der seinerseits offensichtlich von der Länge des verbrauchten Films (oder der entsprechenden Anzahl von Bildern) abhängt, die in MF gespeichert sind. Der Speicher MF ist außerdem mit einem geeigneten "Display" sowie mit den Drucktasten D (display) und R (reset) verbunden. Durch Drücken der Drucktaste D wird auf dem "Display" der gespeicherte Wert sichtbar, durch Drücken der Drucktaste R wird der Speicher gelöscht. Der Start der Vorrichtung wird schließlich von dem Schalter I ausgelöst, durch dessen Schließen die Datenvergleichsschaltung CD und folglich alle übrigen Funktionen des elektronischen Schaltkreises in der vorbeschriebenen Weise in Gang gesetzt werden. Mit einer leichten Verzögerung wird dann in an sich bekannter Weise und mit an sich bekannten Mitteln das Öffnen des Objektivs ausgelöst, das bis zum Ende der Aufnahme offen gehalten wird. Diese Verzögerung ist eingeschaltet worden, um zu Beginn des Aufnahmevorgangs Beeinträchtigungen des Bildes zu vermeiden, die durch die Trägheit des Komplexes und durch die Aufnahme des mechanischen Spiels verursacht würden. Das Startsignal kann von Hand oder automatisch erfolgen, und zu diesem Zweck ist der elektronische Schaltkreis mit einem Schalter MA versehen. Bei Handauslösung ist
der Schalter MA geöffnet, und das Öffnen des Objektivs wird
in bekannter Weise durch einen normalen Drahtauslöser (Bowdenzug) gesteuert, dessen Betätigung vor der Öffnung des Objektivs
das Schließen des Schalters I verursacht. Bei automatischer
Steuerung ist dagegen der Schalter MA geschlossen, weshalb
das Schließen des Schalters I auch die Verzögerungsgruppe
für die Öffnung des Objektivs RAO auslöst, die ihrerseits
über eine geeignete elektromechanische Vorrichtung das Öffnen
und Schließen des Objektivs auslöst. Es wird darauf hingewiesen, daß das Schließen des Schalters I auch durch verschiedene an sich bekannte Fernsteuerungssysteme ausgelöst
werden kann.

Aus dem Gesagten geht hervor, daß es die erfindungsgemäße
Vorrichtung ermöglicht, in sehr einfacher Weise und mit
einem normalen Photoapparat in Längsrichtung verzerrungsfreie Panoramaaufnahmen anzufertigen, ohne daß im Inneren
des Photoapparats irgendein Hilfselement, wie etwa das
bereits erwähnte Plättchen mit einem senkrechten Fenster
angebracht werden muß, sowie den weiteren Vorteil zu erzielen, daß ein Film teilweise für Panoramaaufnahmen und
teilweise für normale Aufnahmen verwendet werden kann.

Es ist ohne weiteres verständlich, daß an der erfindungsgemäßen Einrichtung verschiedene Änderungen vorgenommen
werden können, ohne daß dadurch von der Beschreibung und
Erläuterung abgewichen und somit der Schutzumfang des vorliegenden Schutzrechtes verlassen wird.

DIPL.-CHEM., DR. RER. NAT.
GERHARD VON DER BEY
PATENTANWALT
EUROPEAN PATENT ATTORNEY

D-8012 OTTOBRUNN, den 14.12.1984
AUENSTRASSE 31a
FERNRUF (089) 6 01 31 89
Mein Zeichen: E 004.

Betr.: Europäische Patentanmeldung Nr. 84112897.8,
I.C.C. INTEGRATED CAMERA COMPLEMENTS, I-33170 Pordenone.

## PATENTANSPRÜCHE

1) Vorrichtung zur Herstellung von Panoramaphotographien mit einem üblichen Photoapparat, bestehend im wesentlichen aus einer drehbaren Halterung, an der ein gewöhnlicher Photoapparat befestigt werden kann und die an einem festen Ständer wie einem Stativ für Photoapparate oder dergleichen anbringbar ist, dadurch gekennzeichnet, daß an dem Objektiv des Photoapparats wie eine gewöhnliche Sonnenblende ein Fensterelement (9) angebracht ist, das das Bild in Querrichtung zu begrenzen vermag, und daß erste Antriebseinrichtungen (7), durch die die drehbare Halterung (1) gegenüber dem festen Ständer (6) in Drehung zu versetzen ist, zweite Antriebseinrichtungen (8), durch die eine Aufwickelspule (96) für den in dem erwähnten Photoapparat enthaltenen Film (98) in Umdrehung versetzt werden kann, wobei die Antriebseinrichtungen (7) und (8) aus zwei getrennten untersetzten Getriebemotoren (7) und (8) bestehen, und ein elektronischer Schaltkreis (90), durch den im wesentlichen die Geschwindigkeiten der Antriebseinrichtungen ($M_1 = 7$ und $M_2 = 8$) so gesteuert und geregelt werden, daß die Geschwindigkeit der Antriebseinrichtungen ($7 = M_1$) absolut konstant bleibt, dagegen die der Antriebseinrichtungen ($8 = M_2$) so verändert wird, daß die Gleitgeschwindigkeit des Films (98) den richtigen Wert hat und gleichförmig ist, vorgesehen sind.

2) Vorrichtung nach Anspruch 1, dadurch gekennzeichnet, daß das Fensterelement (9) vorzugsweise aus einem konischen Gehäuse (91), das im wesentlichen einer normalen Sonnenblende ähnelt, oder einer äquivalenten Ausführungsform besteht, wobei dieses Gehäuse (91) vorzugsweise mit einer Vielzahl von in Querrichtung verlaufenden Trennwänden (93-94-95) versehen ist, die aus opaken, zueinander parallelen Schirmen bestehen, die jeweils mit Spalten (931-941-951) ausgestattet sind, die der gleichen Ebene angehören und sich jeweils längs eines Durchmessers der Schirme erstrecken, so daß sie mit ihren Enden einen Winkel abdecken, der mindestens ebenso groß wie der Öffnungswinkel des Objektivs des verwendeten Photoapparats ist, und das Fensterelement (9) außerdem mit einem Gewindering (92) versehen ist, der seine Befestigung an dem Objektiv ermöglicht, und die Anbringung so erfolgt, daß die durch die Spalte (931-941-951) verlaufende Ebene koaxial zum Objektiv verläuft sowie quer und rechtwinklig zur Gleitrichtung des Films (98).

3) Vorrichtung nach Anspruch 1, dadurch gekennzeichnet, daß die Antriebseinrichtungen ($M_1$ = 7 und $M_2$ = 8) mit an sich bekannten Sensoren (73) bzw. (83) ausgestattet sind, durch die deren Drehbewegung festgestellt wird, wobei die von diesen Sensoren (73) bzw. (83) kommenden Signale in dem elektronischen Schaltkreis (90) entsprechend verarbeitet werden, um die jeweiligen Drehgeschwindigkeiten zu steuern und zu regeln.

4) Vorrichtung nach den Ansprüchen 1 und 3, dadurch gekennzeichnet, daß zu dem elektronischen Schaltkreis (90) gehören ein Bildspeicher (MF), durch den die von dem Sensor (83) der Antriebseinrichtung (8) kommenden und vom Bildzähler (CF) verarbeiteten Signale in geeigneter Weise gespeichert werden, ein Feldwinkelwähler (SAC), durch den die Winkelweite der Aufnahme bestimmt wird, ein Geschwindigkeitswähler (SV), durch den die Dreh-Grundgeschwindigkeiten der Antriebseinrichtungen ($M_1$ = 7 und $M_2$ = 8) in Beziehung zur Brennweite des verwendeten Objektivs festgelegt werden, eine Datenvergleichsschaltung (CD) für die gleichzeitige Verarbeitung der vom Speicher (MF), vom
Feldwinkelwähler (SAC), vom Geschwindigkeitswähler (SV)
sowie der vom Detektor der Geschwindigkeit des Films
(RVP) und vom Detektor der Drehgeschwindigkeit des Apparats
(RVM) kommenden Signale, sowie ein Regler für die Drehgeschwindigkeit des Photoapparats (RMRP) und ein Filmaufspulgeschwindigkeitsregler (RMAP) zur Verarbeitung der Signale, die
von dem Datenvergleicher (CD) kommen, um die Speisung der
Antriebseinrichtungen ($M_1 = 7$ und $M_2 = 8$) zu regeln, wobei
der Drehgeschwindigkeitsregler für den Apparat (RMRM) auf
die Speisung der Antriebseinrichtungen ($M_1 = 7$) so wirkt,
daß die diesbezügliche Drehgeschwindigkeit absolut konstant
gehalten wird, und der Filmgeschwindigkeitsregler (RMAP)
so auf die Speisung der Antriebseinrichtungen ($M_2 = 8$) einwirkt, daß ihre Speisung und somit die entsprechende Drehgeschwindigkeit verändert und proportional zum Anwachsen
des Durchmessers, der durch das Aufwickeln des Films (98)
auf die entsprechende Aufwickelspule (96) entsteht, verringert wird, so daß die Gleitgeschwindigkeit des Films (98)
selbst gleichförmig ist.

5) Vorrichtung nach Anspruch 1, dadurch gekennzeichnet,
daß Verzögerungseinrichtungen vorgesehen sind, durch die
das Öffnen des Objektivs gegenüber dem Start der Vorrichtung selbst verzögert wird.

**Fig.1**

**Fig. 2**

-1/3-

0141385

Fig.5

Fig.4

Fig.3

Fig. 6

display

D
R

M F

SAC    SV    CD

RMAP    RVP   CF

RMRM

RVM   RAC

RAO

MA

M₁   M₂